# EUROPÄISCHE PATENTSCHRIFT

(11) **EP 3 062 292 B1**
(45) Veröffentlichungstag und Bekanntmachung des Hinweises auf die Patenterteilung: **17.01.2018**
(21) Anmeldenummer: 16153375.7
(22) Anmeldetag: 29.01.2016
(51) Int. Cl.: G06T 7/00, G06T 3/00

(54) **INSPEKTIONSVERFAHREN UND INSPEKTIONSVORRICHTUNG ZUR ÜBERWACHUNG VON PRODUKTIONSPROZESSEN**
INSPECTION METHOD AND INSPECTION DEVICE FOR MONITORING PRODUCTION PROCESSES
PROCEDE ET DISPOSITIF D'INSPECTION DESTINES A SURVEILLER DES PROCESSUS DE PRODUCTION

(30) Priorität: 25.02.2015 DE 102015002377
(43) Veröffentlichungstag der Anmeldung: 31.08.2016
(73) Patentinhaber: Seidenader Maschinenbau GmbH, 85570 Markt Schwaben (DE)
(72) Erfinder: Kwoka, Dipl.-Ing. Marcin, 85661 Forstinning (DE)
(74) Vertreter: Laufhütte, Dieter

(56) Entgegenhaltungen:
- EP-A- 0 209 077
- WO-A1-92/14142
- WO-A1-2013/104365
- JP-A- H11 326 225
- JP-A- 2012 202 767
- US-A1- 2009 154 789

## Beschreibung

Die vorliegende Erfindung betrifft ein Inspektionsverfahren und eine Inspektionsvorrichtung zur Überwachung von Produktionsprozessen mit zumindest teilweise transparenten Produkten.

Gattungsgemäße Inspektionsverfahren und Inspektionsvorrichtungen finden in vielen Bereichen der Qualitätskontrolle von Produktionsprozessen Verwendung, wo Bedarf besteht, wenigstens teilweise transparente Produkte wie beispielsweise Glaszylinder oder ähnliche Objekte und ggf. auch deren Inhalt auf Verunreinigungen und/oder Beschädigungen zu kontrollieren. Wenn im Folgenden von einem der Begriffe Verunreinigung oder Beschädigung die Rede ist, dann ist dabei der andere Begriff stets mitgemeint.

Solche sogenannten Machine Vision Applikationen mit 2D-Kameras sind beispielsweise aus der JP 2012 202767 A bekannt. Dabei besteht die Problematik, äußere und innere Verunreinigungen bzw. Beschädigungen voneinander zu unterscheiden bzw. voneinander zu trennen. Dies ist darin begründet, dass zum einen vor allem die inneren Verunreinigungen bzw. Beschädigungen für das jeweilige Produkt problematisch sein können, und zum anderen dass bei den genannten 2D-Kameras Informationen zu der dritten Dimension fehlen. Im Folgenden und in den Figuren ist damit die von der Z-Achse beschriebene Dimension gemeint. Ferner bewirkt die Krümmung der kontrollierten Objekte bzw. Glaszylinder eine Verfälschung der Positionen der Verunreinigungen bzw. Beschädigungen, da deren Position auf der Z-Achse vom Radius und vom Winkel des kontrollierten Objekts abhängt. Ferner kann der Linsen-Effekt, welcher aus dem Zusammenspiel von dem untersuchten Objekt und dessen Inhalt abhängt, eine weitere Verfälschung der Position der untersuchten Verunreinigung bzw. Defekte oder Beschädigungen ergeben.

Aus der JP H11 326225 A ist ebenfalls eine optische Inspektionsvorrichtungen bekannt, bei der allerdings lediglich Defekte auf der Außenfläche von zylindrischen Keramikprodukten erkannt werden können, indem Bilder von den Keramikzylindern in einem mechanisch belasteten und im unbelasteten Zustand verglichen werden.

Vor diesem Hintergrund ist es Aufgabe der vorliegenden Erfindung, ein verbessertes Inspektionsverfahren und eine verbesserte Inspektionsvorrichtung bereitzustellen, mittels welcher eventuell vorhandene Verunreinigungen bzw. Defekte an wenigstens teilweise transparenten Produkten bzw. Objekten besser ermittelt werden können.

Diese Aufgabe wird erfindungsgemäß durch ein Verfahren zur Überwachung von Produktionsprozessen, insbesondere von Produktionsprozessen zur Herstellung von zumindest teilweise transparenten Produkten gelöst, wobei insbesondere innere Verunreinigungen bzw. Defekte des Produkts ermittelt werden. Das Verfahren umfasst die Schritte:
Aufnehmen eines ersten Bildes (1) des Produkts;
Berechnen eines ersten aufgefalteten Rotations-Ergebnisbildes (b) aus dem ersten Bild(1);
Aufnehmen eines Rotationsbildes (2) des Produkts;
Berechnen eines aufgefalteten Zwischenergebnisbildes (c) aus dem Rotationsbild (2) ; und
Subtrahieren des aufgefalteten Zwischenergebnisbildes (b) vom aufgefalteten Rotations-Ergebnisbild (c) zu einem ersten Ergebnisbild (d).

Das Berechnen des aufgefalteten Rotations-Ergebnisbildes (b) aus dem ersten Bild (1) umfasst dabei die folgenden Schritte:
Rechnerisches zylindrisches Auffalten des ersten Bildes (1) entlang einer X-Achse, wobei eine äußere Fläche des Produkts entlang der X-Achse gleichmäßig auf einem so entstehenden Ergebnisbild (a) verteilt wird; und
rechnerisches lineares Verschieben des Ergebnisbildes (a) entlang der X-Achse in eine negative Richtung, wobei die Verschiebung einem Rotationswinkel α des Produkts entspricht, um den das Produkt relativ zu einer Kamera zur Aufnahme des Rotationsbildes (2) rotiert werden muss und wobei das bearbeitete Rotations-Ergebnisbild (b) erzeugt wird.

Durch das rechnerische lineare Verschieben des Ergebnisbildes (a) auf eine Art, bei der die Verschiebung einem Rotationswinkel α des Produkts entspricht, der zur Aufnahme des Rotationsbildes (2) vorgenommen werden muss, ist es möglich das derart rechnerisch erstellte Rotations-Ergebnisbild (b) mit dem aufgenommenen Rotationsbild (2) zu vergleichen bzw. die beiden Bilder voneinander zu subtrahieren, wobei außenliegende Deffekte oder Verunreinigungen, welche im Produktionsprozess tolerierbar sind, rausgerechnet werden bzw. sich in den subtrahierten Bildern aufheben und damit entfallen.

Das Berechnen des aufgefalteten Zwischenergebnisbildes (c) aus dem Rotationsbild (2) umfasst den Schritt:

Rechnerisches zylindrisches Auffalten des Rotationsbildes (2) entlang der X-Achse, wobei eine äußere Fläche des Produkts entlang der X-Achse gleichmäßig an dem so entstehenden weiteren Zwischenergebnisbild (c) abgebildet wird.

Durch die erfindungsgemäß vorgesehene Subtraktion bzw. den erfindungsgemäß vorgesehenen Vergleich eines berechneten aufgefalteten Rotations-Ergebnisbildes und eines tatsächlich aufgenommenen Rotationsbildes bzw. eines aufgefalteten Ergebnisbildes des aufgenommenen Rotationsbildes ist es vorteilhaft möglich, die räumlich in oder an einem zu untersuchenden Produkt bzw. Objekt vorhandenen Verunreinigungen bzw. Defekte mittels einer 2D-Kamera zu erfassen. Insbesondere ist es so möglich, zwischen den relevanten, innerhalb des Objekts liegenden Defekten bzw. Verunreinigungen und den an dessen Außenseite liegenden Defekten bzw. Verunreinigungen zu unterscheiden bzw. die weniger relevanten äußeren Verunreinigungen so voneinander zu subtrahieren, dass diese in den Ergebnisbildern nicht mehr auftauchen. Dadurch werden Produkte, die keine inneren Verunreinigungen aufweisen als Gutteile erkannt. Durch die Rotation des entsprechenden Objekts und/oder einer zur Durchführung des Verfahrens genutzten Kamera kann es somit vorteilhaft vermieden werden, umständliche oder teure 3D-Analyse Vorrichtungen bzw. -verfahren zu nutzen.

In einem weiteren bevorzugten Ausführungsbeispiel ist es denkbar, dass das Verfahren ferner die Schritte umfasst:
Berechnen eines weiteren aufgefalteten Rotations-Ergebnisbildes (f) des Produkts aus dem ersten Bild (1), welches eine zum ersten aufgefalteten Rotations-Ergebnisbild (b) entgegengesetzte Rotation aufweist;
Subtrahieren des weiteren aufgefalteten Rotations-Ergebnisbildes (f) vom Ergebnisbild (d) zu einem weiteren Ergebnisbild (g).

Durch die Berechnung unterschiedlicher Rotations-Ergebnisbilder mit einander entgegengesetzten Rotationen ist es erfindungsgemäß möglich, am weiteren Ergebnisbild auch die Verunreinigungen bzw. Defekte, die an der Rückseite der Objektfläche auftreten, zu eliminieren. Da somit Verunreinigungen bzw. Defekte des gesamten Außenbereichs des Objekts aus dem weiteren Ergebnisbild eliminierbar sind, verbleiben nunmehr im weiteren Ergebnisbild nur mehr noch die relevanten, sich im Inneren des Objekts befindlichen Verunreinigungen bzw. Defekte. Werden derartige Verunreinigungen im weiteren Ergebnisbild tatsächlich ermittelt, so kann das Objekt entsprechend als Ausschussteil erkannt bzw. deklariert werden.

In einem weiteren bevorzugten Ausführungsbeispiel ist denkbar, dass ein Teil oder mehrere Teile des Ergebnisbildes und/oder des weiteren Ergebnisbildes als Area of Interest definiert wird und in diesem Teil eine weitere Ermittlung von Verunreinigungen durchgeführt wird, und/oder dass die Schritte des Verfahrens wiederholt werden, bis das Produkt in einem Bereich von 360° untersucht worden ist.

In dem Area of Interest bzw. in den Areas of Interest kann eine weitere Suche nach inneren Verunreinigungen durchgeführt werden, wobei diese weitere Suche dann beispielsweise mit geänderten Parametern wie beispielsweise größerer Vergrößerung des aufgenommenen Bildes oder veränderten, insbesondere verkleinerten Rotationswinkeln, durchgeführt werden kann. Hierzu ist es denkbar, dass das Area of Interest in einem Bereich definiert wird, in dem eine Verunreinigung festgestellt worden ist. Durch die beispielhaft genannte größere Vergrößerung des Bildes und/oder den kleineren Rotationswinkel ist es dabei bei der weiteren Untersuchung des Area of Interest möglich, innenliegende von außenliegenden Verunreinigungen besser zu unterscheiden und somit die Anzahl der richtigerweise als Ausschuss erkannten Produkte zu erhöhen.

In einem weiteren bevorzugten Ausführungsbeispiel ist es denkbar, dass vor dem Aufnehmen des Rotationsbildes (2) die Schritte durchgeführt werden:

Zueinanderdrehen des Produkts und/oder einer Kamera um den Rotationswinkel α.

Je nach Ausgestaltung des Produktionsprozesses kann somit entweder das zu untersuchende Produkt oder die zur Untersuchung des Produkts genutzte Kamera oder auch sowohl das Produkt als auch die Kamera gedreht werden um so die für die Aufnahme des Rotationsbildes notwendige Rotation zu erreichen.

In einem weiteren bevorzugten Ausführungsbeispiel ist ferner denkbar, dass das Berechnen eines aufgefalteten Rotations-Ergebnisbildes (f) aus dem ersten Bild (1) des Produkts, wobei das Rotations-Ergebnisbild (f) eine zum Rotations-Ergebnisbild (b) entgegengesetzte Rotation aufweist, die Schritte umfasst:
Rechnerisches lineares Verschieben des Bildes (1) entlang der X-Achse in eine positive Richtung, wobei die Verschiebung einem Rotationswinkel α des Produkts entspricht, der zur Aufnahme des Rotationsbildes (2) vorgenommen werden muss und wobei ein weiteres Rotations-Ergebnisbild (e) erzeugt wird;
Rechnerisches zylindrisches Auffalten des Rotations-Ergebnisbildes (e) entlang der X-Achse, wobei eine äußere Fläche des Produkts entlang der X-Achse gleichmäßig auf dem so entstehenden Rotations-Ergebnisbild (f) abgebildet wird.

In einem weiteren bevorzugten Ausführungsbeispiel ist denkbar, dass das vorliegende Verfahren ein Verfahren zur Überwachung von Produktionsprozessen zum Abfüllen von zumindest teilweise transparenten Produkten.

In einem weiteren bevorzugten Ausführungsbeispiel ist denkbar, dass das vorliegende Verfahren ein Verfahren zur Überwachung von Produktionsprozessen zur Herstellung von Glaszylindern ist. Im weitesten Sinne kann es sich bei den Glaszylindern um Gefäße, Ampullen oder sonstige transparente oder wenigsten teilweise transparente Objekte mit beispielsweise kreisförmigem Querschnitt handeln. Denkbar sind aber auch andere Querschnitte.
In einem weiteren bevorzugten Ausführungsbeispiel ist denkbar, dass das Verschieben mit einem Faktor skaliert wird und/oder mit einer mathematischen Formel beschrieben wird, die vom Linsen-Effekt des Produkts und/oder von unterschiedlichen Brechungsindizes des Produkt-Inhalts abhängen. Bei dem Inhalt kann es sich beispielsweise um Wasser, Gel, Luft oder sonstige transparente oder im Wesentlichen transparente Substanzen handeln. Denkbar ist auch ein Produkt mit evakuiertem Innenhohlraum. Für die entsprechenden Produkte kann der Fachmann über übliche Versuche den Linsen-Effekt bzw. die Brechungsindizes ermitteln und in das rechnerische Verschieben einfließen lassen.
Die vorliegende Erfindung richtet sich auch auf eine Inspektionsvorrichtung zur Durchführung eines Verfahrens nach einem der Ansprüche 1 bis 7, mit einer Einrichtung zur Bildaufnahme eines zu inspizierenden Produkts, mit einer Einrichtung zur Drehung des zu inspizierenden Produkts und/oder Drehung der Einrichtung zur Bildaufnahme, einer Recheneinrichtung zur Auswertung von aufgenommenen Bildern sowie zur Steuerung der Drehung des Produkts und/oder der Einrichtung zur Bildaufnahme, sowie einer Einrichtung zur Ausgabe des Auswertungsergebnisses.
Weitere Einzelheiten, Merkmale und Vorteile sind anhand eines in den Figuren dargestellten Ausführungsbeispiels erläutert. Dabei zeigen:
- Figuren 1a und 1b:: einen schematischen Aufbau einer Inspektionsvorrichtung zur Durchführung des erfindungsgemäßen Verfahrens und
- Figur 2:: einen schematischen Ablauf eines erfindungsgemäßen Verfahrens.

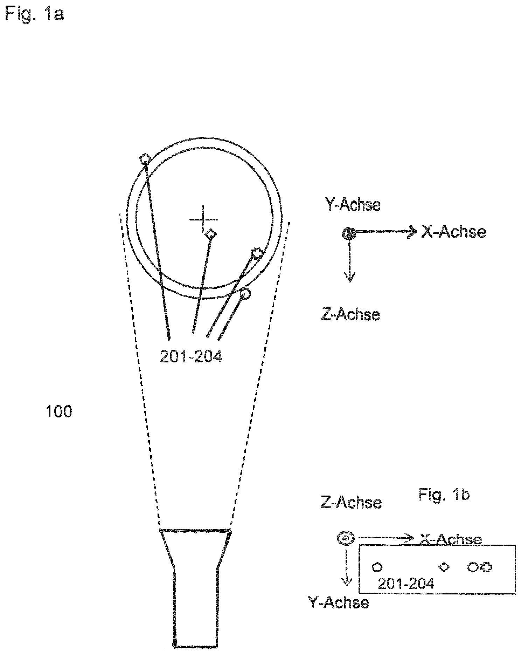

Figur 1 a zeigt die schematische Darstellung einer Inspektionsvorrichtung zur Durchführung eines erfindungsgemäßen Verfahrens. Hierbei ist eine 2D-Kamera 100 gezeigt, die ein Bild eines zu überwachenden Produkts 200 aufnimmt. Das Produkt ist dabei zylindrisch ausgeführt und in Draufsicht dargestellt. Damit zeigt es sich in der in Figur 1a gezeigten kreisförmigen Form. Am Produkt 200 sind vier Verunreinigungen 201 bis 204 dargestellt, welche innerhalb und außerhalb des Produkts 200 vorliegen. Zur besseren Orientierung ist ein Koordinatensystem mit den Achsen X, Y und Z dargestellt.

Figur 1b zeigt ein von der Situation aus Figur 1 a aufgenommenes Bild des Produkts 200, wobei zu erkennen ist, dass die Verunreinigungen 201 bis 204 nunmehr wie von der 2D-Kamera 100 aufgenommen von der Seite zu sehen sind. Es ist ersichtlich, dass in der Aufnahme der Figur 1b Informationen zur Lage der Verunreinigungen 201 bis 204 auf der Z-Achse verloren gegangen sind. Es ist somit nicht mehr erkennbar, ob die Verunreinigungen 201 bis 204 innerhalb oder außerhalb des Produkts 200 vorliegen.

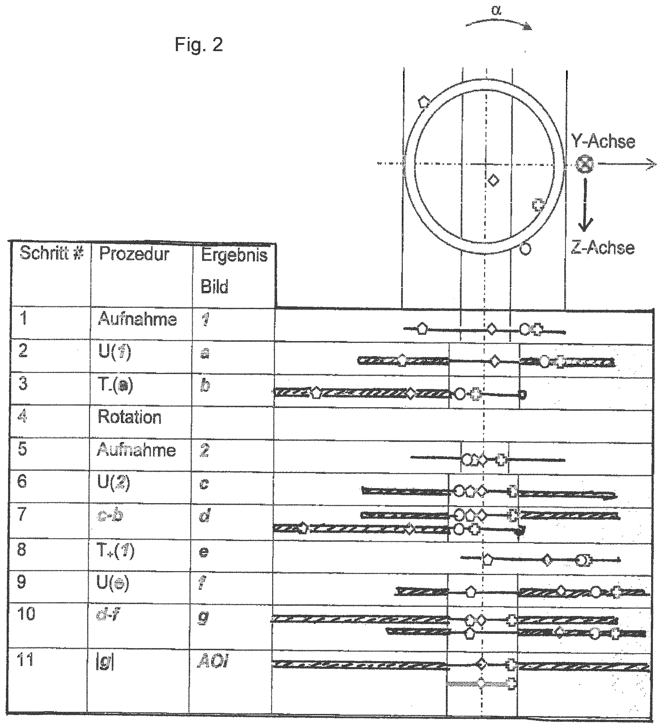

Figur 2 zeigt einen beispielhaften Ablauf des erfindungsgemäßen Verfahrens. Hierbei sind in der linken Spalte die Schritte 1 bis 11 des Verfahrens aufgezeigt. Im rechten Bereich der Tabelle der Figur 2 ist schematisch dargestellt, wie das jeweilige aufgenommene oder berechnete Bild verfahrensabhängig erstellt bzw. verändert wird. Erfindungsgemäß soll mittels des vorliegenden Verfahrens eine Trennung von innen und außenliegenden Verunreinigungen des Produkts ermittelt werden. Hiermit ist gemeint, dass das Verfahren dazu geeignet ist, die für die Qualität des Produkts relevanteren inneren Verunreinigungen von den äußeren Verunreinigungen zu unterscheiden und ggf. innen verunreinigte Produkte entsprechend als Ausschuss zu erkennen. Eine resultierende 3D-Inspektion die erfindungsgemäß die oben benannte Trennung ermöglicht wird mittels Verrechnung mehrerer 2D-Kamerabilder und Drehung des abgelichteten Produkts bzw. Glaszylinders realisiert. Das Verfahren läuft dabei, wie Figur 2 entnehmbar ist, in mehreren Schritten ab:

### Schritt 1

Kamera Bild 1 wird aufgenommen.

### Schritt 2

Bild 1 wird entlang X-Achse zylindrisch aufgefaltet, so dass die äußere Fläche des Glas-Zylinders entlang der X-Achse gleichmäßig am Bild a verteilt wird.

### Schritt 3

Bild a wird entlang der X-Achse in die negative Richtung linear verschoben. Die Größe der X-Verschiebung entspricht einem Rotationswinkel α des Zylinders der bis zum Aufnahme des Bildes 2 vorgenommen werden muss.

### Schritt 4

Der Glas-Zylinder wird um Rotationswinkel α gedreht.

### Schritt 5

Kamera Bild 2 wird aufgenommen.

### Schritt 6

Bild 2 wird entlang X-Achse zylindrisch aufgefaltet, so dass die äußere Fläche des Glas-Zylinders entlang der X-Achse gleichmäßig am Bild c verteilt wird

### Schritt 7

Ergebnisbild b aus Schritt 3 wird vom Ergebnisbild c aus Schritt 6 subtrahiert. Damit eliminieren sich am Ergebnisbild d die Verunreinigungen, die an der Frontseite der Zylinder-Fläche auftreten.

### Schritt 8

Bild 1 wird entlang der X-Achse in positive Richtung linear verschoben. Die Größe der X-Verschiebung entspricht einem Rotationswinkel α des Zylinders, der bis zur Aufnahme des Bildes 2 vorgenommen werden muss. Die Verschiebung wird zusätzlich mit einem Faktor skaliert, der vom Linsen-Effekt des Zylinders abhängt.

Es kann notwendig sein, die Verschiebung und Skalierung mit einer neuen mathematischen Formel zu beschreiben. Dies hängt vom unterschiedlichen Brechungsindex des Zylinder-Inhalts (wie z.B. Wasser, Gel, Luft, ...) ab.

### Schritt 9

Ergebnisbild e aus Schritt 8 wird entlang der X-Achse zylindrisch aufgefaltet, so dass die äußere Fläche des Glas-Zylinders entlang der X-Achse gleichmäßig am Bild f verteilt wird.

### Schritt 10

Ergebnisbild f aus Schritt 9 wird vom Ergebnisbild d aus Schritt 7 subtrahiert. Damit eliminieren sich am Ergebnisbild g auch die Verunreinigungen, die an der Rückseite der Zylinder Fläche auftreten.

### Schritt 11

Ein Teil von dem Ergebnisbild g aus Schritt 10 wird als Area Of Interest (AOI) definiert. In diesem Bereich wird eine weitere Suche nach inneren Verunreinigungen möglich.

Diese Auswertung wird mit gängigen und einfachen Algorithmen der Bildverarbeitung durchgeführt - wie bspw. die Konturanalyse -, die keine weitere Beschreibung benötigen.

### Schritt 12

Schritte 1-11 werden mehrmals wiederholt um die gesamten 360° der Zylinderfläche mit AOIs abzudecken.

## Patentansprüche

1. Verfahren zur Überwachung von Produktionsprozessen mit zumindest teilweise transparenten Produkten, wobei innere Verunreinigungen des Produkts ermittelt werden, mit den Schritten:
Aufnehmen eines ersten Bildes (1) des Produkts;
Berechnen eines ersten aufgefalteten Rotations-Ergebnisbildes (b) aus dem ersten Bild (1), wobei das Berechnen des aufgefalteten Rotations-Ergebnisbildes (b) die Schritte umfasst:
Rechnerisches zylindrisches Auffalten des ersten Bildes (1) entlang einer X-Achse, wobei eine äußere Fläche des Produkts entlang der X-Achse gleichmäßig auf einem so entstehenden Ergebnisbild (a) verteilt wird; und
Rechnerisches lineares Verschieben des Ergebnisbildes (a) entlang der X-Achse in eine negative Richtung, wobei die Verschiebung einem Rotationswinkel α des Produkts entspricht, um den das Produkt relativ zu einer Kamera zur Aufnahme des Rotationsbildes (2) rotiert werden muss und wobei das bearbeitete Rotations-Ergebnisbild (b) erzeugt wird;
Zueinanderdrehen des Produkts und/oder der Kamera zur Aufnahme des Rotationsbildes (2) um den Rotationswinkel α; Aufnehmen eines Rotationsbildes (2) des Produkts;
Berechnen eines aufgefalteten Zwischenergebnisbildes (c) aus dem Rotationsbild (2), wobei das Berechnen des aufgefalteten Zwischenergebnisbildes (c) den Schritt umfasst:
Rechnerisches zylindrisches Auffalten des Rotationsbildes (2) entlang der X-Achse, wobei eine äußere Fläche des Produkts entlang der X-Achse gleichmäßig an dem so entstehenden Zwischenergebnisbild (c) abgebildet wird;
Subtrahieren des aufgefalteten Rotations-Ergebnisbildes (b) vom aufgefalteten Zwischenergebnisbild (c) zu einem Ergebnisbild (d).

2. Verfahren nach Anspruch 1, **dadurch gekennzeichnet, dass** das Verfahren die Schritte umfasst:
Berechnen eines weiteren aufgefalteten Rotations-Ergebnisbildes (f) des Produkts aus dem ersten Bild (1), welches eine zum ersten aufgefaltenten Rotations-Ergebnisbild (b) entgegengesetzte Rotation aufweist;
Subtrahieren des weiteren aufgefalteten Rotations-Ergebnisbildes (f) vom Ergebnisbild (d) zu einem weiteren Ergebnisbild (g).

3. Verfahren nach Anspruch 1 oder 2, **dadurch gekennzeichnet, dass** ein Teil oder mehrere Teile des Ergebnisbildes (g) und/oder des Ergebnisbildes (d) als Area Of Interest (AOI) definiert wird und in diesem Teil eine weitere Ermittlung von Verunreinigungen durchgeführt wird, und/oder dass die Schritte des Verfahrens wiederholt werden, bis das Produkt in einem Bereich von 360° untersucht worden ist.

4. Verfahren nach einem der Ansprüche 2 bis 4, **dadurch gekennzeichnet, dass** das Berechnen eines aufgefalteten Rotations-Ergebnisbildes (f) aus dem ersten Bild (1) des Produkts, wobei das Rotations-Ergebnisbild (f) eine zum Rotations-Ergebnisbild (b) entgegengesetzte Rotation aufweist, die Schritte umfasst:
Rechnerisches lineares Verschieben des Bildes (1) entlang der X-Achse in eine positive Richtung, wobei die Verschiebung einem Rotationswinkel α des Produkts entspricht, der zur Aufnahme des Rotationsbildes (2) vorgenommen werden muss und wobei ein weiteres Rotations-Ergebnisbild (e) erzeugt wird;
Rechnerisches zylindrisches Auffalten des Rotations-Ergebnisbildes (e) entlang der X-Achse, wobei eine äußere Fläche des Produkts entlang der X-Achse gleichmäßig auf dem so entstehenden Rotations-Ergebnisbild (f) abgebildet wird.

5. Verfahren nach einem der vorhergehenden Ansprüche, **dadurch gekennzeichnet, dass** es ein Verfahren zur Überwachung von Produktionsprozessen zum Abfüllen von zumindest teilweise transparenten Produkten ist.

6. Verfahren nach einem der vorhergehenden Ansprüche, **dadurch gekennzeichnet, dass** es ein Verfahren zur Überwachung von Produktionsprozessen zur Herstellung von Glaszylindern ist.

7. Verfahren nach einem der vorhergehenden Ansprüche, **dadurch gekennzeichnet, dass** das Verschieben mit einem Faktor skaliert wird und/oder mit einer mathematischen Formel beschrieben wird, die vom Linsen-Effekt des Produkts und/oder von unterschiedlichen Brechungsindizes des Produkt-Inhaltes abhängen.

8. Inspektionsvorrichtung zur Durchfürhrung eines Verfahrens nach einem der Ansprüche 1 bis 8, mit einer Einrichtung zur Bildaufnahme eines zu inspizierenden Produkts, mit einer Einrichtung zur Drehung des zu inspizierenden Produkts und/oder Drehung der Einrichtung zur Bildaufnahmen, einer Recheneinrichtungs zur Auswertung von aufgenommenen Bildern sowie zur Steuerung der Drehung des Produkts und/oder der Einrichtung zur Bildaufnahme, sowei einer Einrichtung zur Ausgabe des Auswertungsergebnisses.

## Claims

1. A method for monitoring production processes having at least partly transparent products, wherein interior contaminants of the product are determined, said method comprising the steps:
taking a first image (1) of the product;
calculating a first unfolded rotation result image (b) from the first image (1), with the calculation of the unfolded rotation result image (b) comprising the steps:
mathematical cylindrical unfolding of the first image (1) along an X axis, with an outer surface of the product along the X axis being evenly distributed over a result image (a) thus produced; and
mathematical linear displacement of the result image (a) along the X axis in a negative direction, with the displacement corresponding to a rotation angle α of the product by which the product has to be rotated relative to a camera for taking the rotation image (2) and with the processed rotation result image (b) being produced;
turning the product and/or the camera toward one another to take the rotation image (2) about the rotation angle α;
taking a rotation image (2) of the product;
calculating a folded intermediate result image (c) from the rotation image (2), with the calculation of the unfolded intermediate result image (c) comprising the step:
mathematical cylindrical unfolding of the rotation image (2) along the X axis, with an outer surface of the product along the X axis being evenly imaged at the intermediate result image (c) thus being produced;
subtracting the unfolded rotation result image (b) from the unfolded intermediate result image (c) to form a result image (d).

2. A method in accordance with claim 1, **characterized in that** the method comprises the following steps:
calculating a further unfolded rotation result image (f) of the product from the first image (1) that has an opposite rotation to the first unfolded rotation result image (b); and
subtracting the further unfolded rotation result image (f) from the result image (d) to form a further result image (g).

3. A method in accordance with claim 1 or claim 2, **characterized in that** a part or a plurality of parts of the result image (g) and/or of the result image (d) is/are defined as an area or interest (AOI) or as areas of interest (AOIs) and that a further determination of contaminants is carried out in this part or in these parts and/or that the steps of the method are repeated until the product has been inspected in a range of 360

4. A method in accordance with one of the claims 2 to 4, **characterized in that** the calculation of an unfolded rotation result image (f) from the first image (1) of the product, with the rotation result image (f) having a rotation opposite to the rotation result image (b), comprises the following steps:
mathematical linear displacement of the image (1) along the X axis in a positive direction, with the displacement corresponding to a rotation angle α of the product that has to be carried out to take the rotation image (2) and with a further rotation result image (e) being produced; and
mathematical cylindrical unfolding of the rotation result image (e) along the X axis, with an outer surface of the product along the X axis being evenly imaged at the intermediate result image (f) thus being produced.

5. A method in accordance with one of the preceding claims, **characterized in that** it is a method for monitoring production processes for filling at least partly transparent products.

6. A method in accordance with one of the preceding claims, **characterized in that** it is a method for monitoring production processes for manufacturing glass cylinders.

7. A method in accordance with one of the preceding claims, **characterized in that** the displacement is scaled by a factor and/or is described by a mathematical formula that depends/depend on the lens effect of the product and/or on the different refractive indices of the product contents.

8. An inspection apparatus for carrying out a method in accordance with one of the claims 1 to 8 having a device for taking images of a product to be inspected; having a device for rotating the product to be inspected and/or for rotating the device for taking images; having a processing device for evaluating taken images and for controlling the rotation of the product and/or of the device for taking images; and having a device for outputting the evaluation result.

## Revendications

1. Procédé destiné à surveiller des processus de production avec des produits au moins partiellement transparents, des impuretés intérieures du produit étant recherchées, comprenant les étapes consistant à :
acquérir une première image (1) du produit ;
calculer une première image de résultat de rotation dépliée (b) à partir de la première image (1), le calcul de l'image de résultat de rotation dépliée (b) comprenant les étapes consistant à :
effectuer un dépliage cylindrique par voie de calcul de la première image (1) le long d'un axe X, une surface extérieure du produit étant répartie le long de l'axe X de manière homogène sur une image de résultat (a) ainsi obtenue ; et
effectuer un déplacement linéaire par voie de calcul de l'image de résultat (a) le long de l'axe X dans une direction négative, le déplacement correspondant à un angle de rotation α du produit, selon lequel le produit doit être tourné par rapport à une caméra pour l'acquisition de l'image de rotation (2) et l'image de résultat de rotation (b) éditée étant générée ;
tourner l'un vers l'autre selon l'angle de rotation α le produit et/ou la caméra pour l'acquisition de l'image de rotation (2) ;
acquérir une image de rotation (2) du produit ;
calculer une image de résultat intermédiaire dépliée (c) à partir de l'image de rotation (2), le calcul de l'image de résultat intermédiaire dépliée (c) comprenant l'étape consistant à :
effectuer un dépliage cylindrique par voie de calcul de l'image de rotation (2) le long de l'axe X, une surface extérieure du produit étant représentée le long de l'axe X de manière homogène sur l'image de résultat intermédiaire (c) ainsi obtenue ;
soustraire l'image de résultat de rotation dépliée (b) de l'image de résultat intermédiaire dépliée (c) pour obtenir une image de résultat (d).

2. Procédé selon la revendication 1, **caractérisé en ce que** le procédé comprend les étapes consistant à :
calculer une autre image de résultat de rotation dépliée (f) du produit à partir de la première image (1), qui comporte une rotation inverse à la première image de résultat de rotation dépliée (b) ;
soustraire l'autre image de résultat de rotation dépliée (f) de l'image de résultat (d) pour obtenir une autre image de résultat (g).

3. Procédé selon la revendication 1 ou 2, **caractérisé en ce qu'**une partie ou plusieurs parties de l'image de résultat (g) et/ou de l'image de résultat (d) est/sont définie(s) comme Area Of Interest (AOI) et une autre recherche d'impuretés est effectuée dans cette partie, et/ou **en ce que** les étapes du procédé sont répétées, jusqu'à ce que le produit ait été examiné dans une plage de 360°.

4. Procédé selon l'une des revendications 2 à 4, **caractérisé en ce que** le calcul d'une image de résultat de rotation dépliée (f) à partir de la première image (1) du produit, l'image de résultat de rotation (f) comportant une rotation inverse à l'image de résultat de rotation (b), comprend les étapes consistant à :
effectuer un déplacement linéaire par voie de calcul de l'image (1) le long de l'axe X dans une direction positive, le déplacement correspondant à un angle de rotation α du produit, qui doit être réalisé pour l'acquisition de l'image de rotation (2) et une autre image de résultat de rotation (e) étant générée ;
effectuer un dépliage cylindrique par voie de calcul de l'image de résultat de rotation (e) le long de l'axe X, une surface extérieure du produit étant représentée le long de l'axe X de manière homogène sur l'image de résultat de rotation (f) ainsi obtenue.

5. Procédé selon l'une des revendications précédentes, **caractérisé en ce qu'**il s'agit d'un procédé destiné à surveiller des processus de production pour le remplissage de produits au moins partiellement transparents.

6. Procédé selon l'une des revendications précédentes, **caractérisé en ce qu'**il s'agit d'un procédé destiné à surveiller des processus de production pour fabriquer des cylindres en verre.

7. Procédé selon l'une des revendications précédentes, **caractérisé en ce que** le déplacement est mis à l'échelle avec un facteur et/ou est décrit par une formule mathématique, qui dépendent de l'effet de loupe du produit et/ou de différents indices de réfraction du contenu du produit.

8. Dispositif d'inspection destiné à exécuter un procédé selon l'une des revendications 1 à 8, comprenant un dispositif d'acquisition d'image d'un produit à inspecter, un dispositif de rotation du produit à inspecter et/ou de rotation du dispositif d'acquisition d'image, un dispositif de calcul pour interpréter des images acquises ainsi que pour commander la rotation du produit et/ou du dispositif d'acquisition d'image, ainsi qu'un dispositif de sortie du résultat de l'interprétation.
